Europäisches Patentamt

European Patent Office

Office européen des brevets

(11) Publication number: **0 178 090**
**B1**

# (12) EUROPEAN PATENT SPECIFICATION

(45) Date of publication of patent specification: **22.11.90**

(51) Int. Cl.⁵: **G 01 F 17/00**

(21) Application number: **85306694.2**

(22) Date of filing: **19.09.85**

(54) Volume determination process.

(30) Priority: **19.09.84 JP 194782/84**
**19.09.84 JP 194783/84**
**12.10.84 JP 213372/84**
**09.11.84 JP 236455/84**
**09.11.84 JP 236456/84**
**09.11.84 JP 236457/84**
**09.11.84 JP 236458/84**
**09.11.84 JP 236459/84**
**09.11.84 JP 236460/84**
**09.11.84 JP 236461/84**

(43) Date of publication of application:
**16.04.86 Bulletin 86/16**

(45) Publication of the grant of the patent:
**22.11.90 Bulletin 90/47**

(84) Designated Contracting States:
**DE FR GB**

(56) References cited:
**DE-A-3 120 193**
**GB-A-1 480 022**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Kitahashi, Tadahiro**
**Godo Shukusha 3-102, 2-1 Higashiura Kitayama-cho**
**Toyohashi-shi Aichi (JP)**
Inventor: **Saito, Osami**
**6989, Fujimi Minamiohshimizu-cho**
**Toyohashi-shi Aichi (JP)**
Inventor: **Matsuno, Tadaaki**
**3-51, Anyouji 5-chome Ritto-cho**
**Kurita-gun Shiga (JP)**
Inventor: **Nakamura, Yoshihiro**
**Kitagawa Haitsu 103, 4-30 Shibukawa 2-chome**
**Kusatsu-shi Shiga (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to assessing the volume of an article, for example to a method or apparatus for producing a measure of the volume, and hence the weight, of an irregularly shaped article such as a vegetable or a fruit.

The weight of an article is generally determined by a weight sensor. However, where the weight of a vegetable or other article having an irregular surface is to be measured, it is sometimes desirable to assess the weight in a noncontact manner, without using a normal weight sensor.

The British patent application GB—A—2 078 937 discloses a volume assessment method in which the particle concerned is effectively treated as a succession of separate slices, or "zones". For each of these zones, measurements are made of the respective projected widths of the zone in at least two different directions, for example at right angles to one another, and these measurements are used to calculate an approximate value for the volume of the particle. The accuracy of such a method may not be regarded as sufficient for some purposes, particularly when applied to very irregularly shaped articles.

British Patent Specification No. 1 480 022 discloses a method, of assessing the volumes of postal packages such as envelopes, which employs opposing arrays of spring-loaded rollers that press against a package passing between the arrays to obtain measures of the thickness of the package at different positions thereon. Such a system is clearly unsuitable mechanically for assessing the volume of an article such as a fruit or vegetable, with a very irregular shape, and would also involve an undesirable degree of contact with the article concerned.

According to one aspect of the present invention there is provided apparatus for assessing the volume of an article, comprising: a light source arranged for projecting light obliquely downwardly through an arrangement of one or more slits to be incident on the said article, when the apparatus is in use, so as to provide a line pattern on a surface region of the article; data production means, including a television camera arranged for receiving light leaving the said surface region in an imaging direction oblique to the direction of projection of the light onto the article, for producing image data representative of the said line pattern as viewed by the camera; and data processing means connected for employing the said image data, when the apparatus is in use, to compute the respective distances from a predetermined reference plane of a plurality of points, on the said surface region, through which the said line pattern passes, and to derive from the computed respective distances a measure of the volume of the article.

According to another aspect of the present invention there is provided a method of assessing the volume of an article, comprising the steps of:

projecting light obliquely downwardly through an arrangement of one or more slits to be incident on the said article so as to provide a line pattern on a surface region of the article; employing a television camera to receive light leaving the said surface region, in an imaging direction oblique to the direction of projection of the light onto the article, and to produce therefrom image data representative of the said line pattern as viewed by the camera; employing the said image data to compute the respective distances from a predetermined reference plane of a plurality of points, on the said surface region, through which the said line pattern passes; and deriving from the computed respective distances a measure of the volume of the article.

In a preferred embodiment of the invention a cyclically repeated differentiation and comparison process is carried out in which respective differential values are computed for a line of the said line pattern, in relation to a predetermined coordinate system, at successive points along that line, the successively determined differential values are compared with one another, and an indication of the existence of a flaw on the surface of the article is provided if the comparison reveals a difference, between one such differential value and the next, that is greater than a preset reference value.

The measure of volume that is found by an embodiment of the invention can conveniently be multiplied by an appropriate specific gravity value to obtain a measure of the weight of the article.

Reference will now be made, by way of example, to the accompanying drawings, in which:

Figs. 1a and 1b are diagrams for use in explaining basic principles of the present invention;

Fig. 2 is a diagram of apparatus, including circuitry shown in block diagram form, for putting into effect an embodiment of the present invention;

Fig. 3 is a diagram for use in explaining another embodiment of the present invention;

Figs. 4a, 4b and 4c are diagrams for use in explaining several embodiments of the present invention;

Fig. 5 is a flowchart illustrative of two embodiments of the present invention;

Fig. 6 is a diagram for use in explaining two further embodiments of the present invention;

Fig. 7 is a flowchart of still another embodiment of the present invention;

Fig. 8 is a flowchart of the embodiment of Fig. 3;

Fig. 9 is a flowchart of one of the embodiments of Fig. 6;

Fig. 10 is a diagram of apparatus, including generalized circuitry shown in block diagram form, which may be taken as illustrative of any one of four additional embodiments of the present invention;

Figs. 11a and 11b are diagrams explanatory of one of the embodiments of Fig. 10;

Figs. 12a and 12b are diagrams explanatory of another of the embodiments of Fig. 10;

Fig. 13 is a diagram for use in explaining the remaining two of the embodiments of Fig. 10; and

Figs. 14 to 17 are respective flowcharts of the embodiments of Fig. 10.

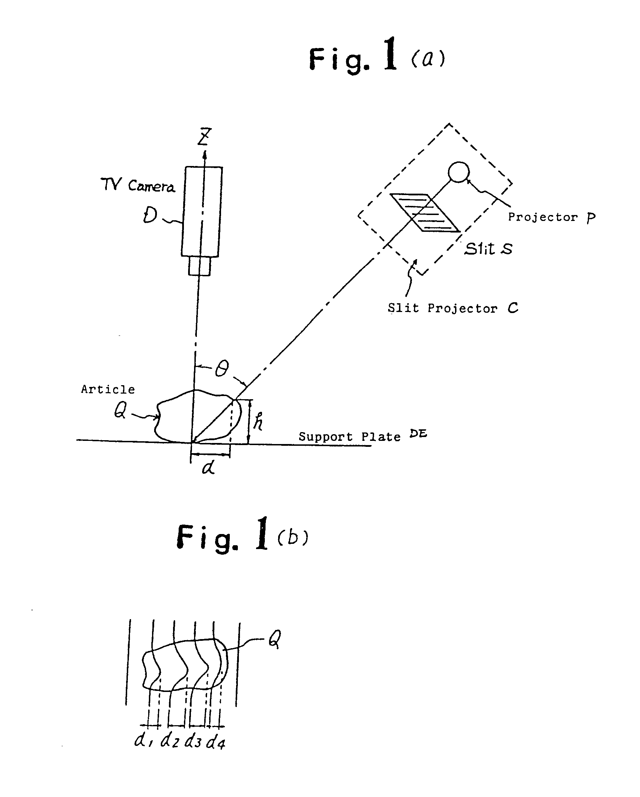

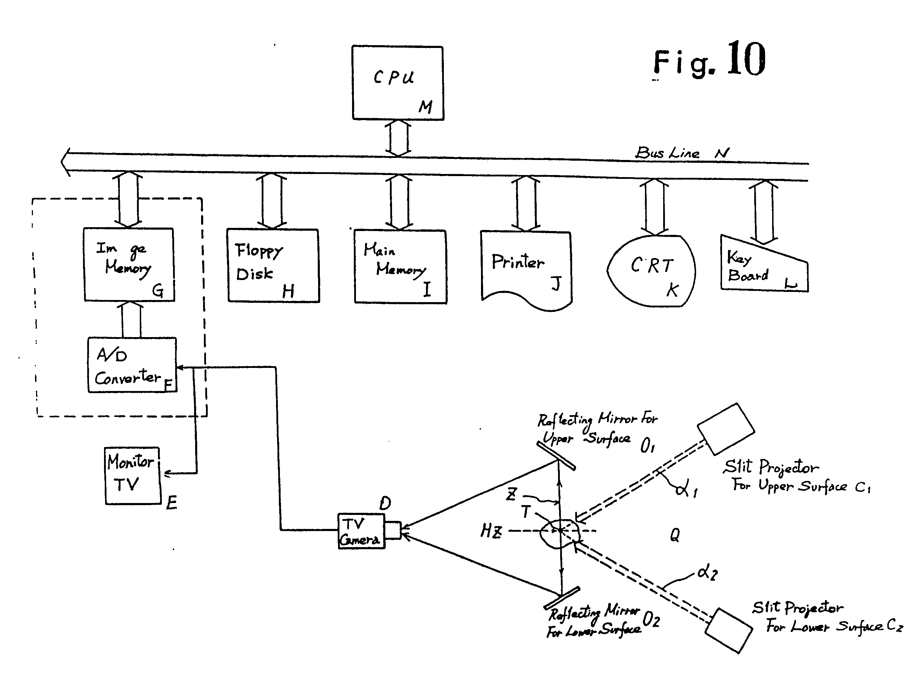

Volume assessment methods described herein and embodying the present invention can be classified roughly into two classes. In one class, a slit pattern is projected obliquely downwardly onto an article whose volume is to be assessed. In the other class, slit patterns are projected obliquely downwardly and upwardly respectively onto an article to be assessed. Volume determination methods of the former class will be described first, with reference to Figs. 1 to 9, and volume determination methods of the latter class will then be described with reference to Figs. 10 to 17.

Figs. 1a and 1b serve to illustrate basic principles of a volume assessment method embodying the present invention. In Fig. 1a a television camera D is shown positioned above an article Q to be assessed, which article is placed on a support plate DE. A slit projector C composed of a projector P and a slit plate S is positioned such that the axis of the slit projector C along which a slit pattern is projected by the slit projector C extends at an angle θ to the optical axis Z of the television camera D. When a pattern of slits is projected by the slit projector C onto the article Q, a line of the projected pattern, which line in the absence of the article Q would appear on the plate DE at the position where that plate is met by the optical axis Z, appears displaced through a distance $d$ from the optical axis Z when viewed from the television camera D. The deviation $d$ (of such a deformed slit pattern line) having been determined, the thickness (height) $h$ of the article at the monitored position of the pattern line concerned can be calculated from the equation:

$$h = d \tan (\pi - \theta) \qquad (1)$$

Having thus determined the heights $h$ of the respective pattern lines from observed deviations such as those indicated respectively by references $d_1$ to $d_4$ for four pattern lines in Fig. 1b, an approximate measure of the volume of the article can be computed on the basis of these height values determined for the upper surface region of the article Q. The weight of the article can thus be determined, by multiplying the volume of the article by a specific gravity value appropriate thereto, without using any weight sensor.

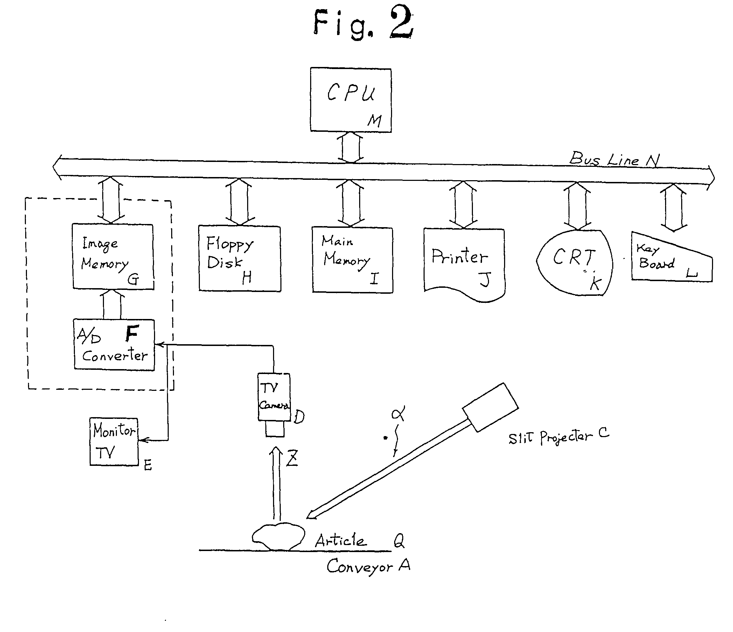

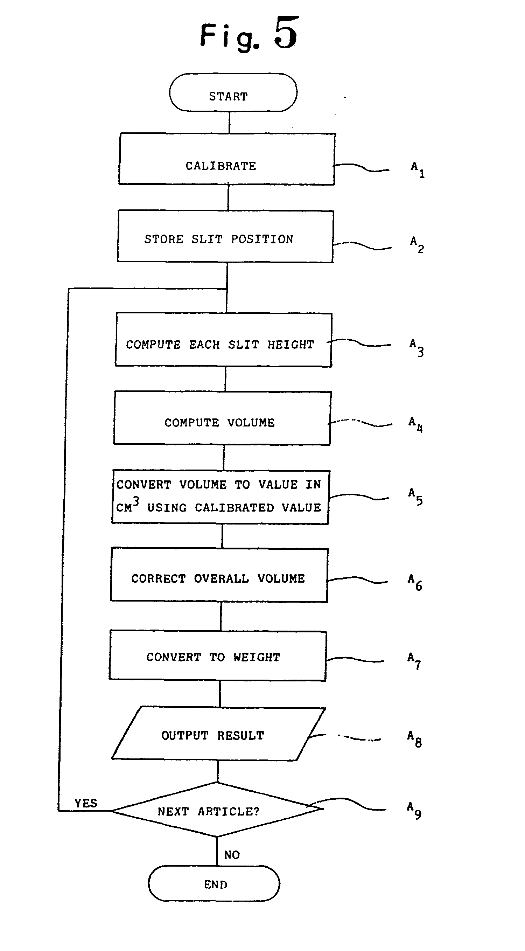

Fig. 2 shows a set-up such as that of Fig. 1a, with circuitry for use therewith to determine the weight of an article. The slit projector C is positioned obliquely upwardly of the article Q placed on a conveyor A. The slit line pattern projected onto the article Q is imaged or detected by the television camera D disposed directly over the article Q. The image of the slit pattern is supplied from the television camera D to an A/D converter F and a monitor television receiver E. The A/D converter F converts the image into 256 × 256 8-bit pixels which are then stored in an image memory G. The image memory G is connected by a bus N to a floppy disk unit H, a main memory I, a printer J, a cathode-ray tube (CRT) K, a key-board L, and a central processing unit (CPU) M. The CPU M executes the cycle of operation indicated by the flowchart of Fig. 5 for determining the weight of the article Q.

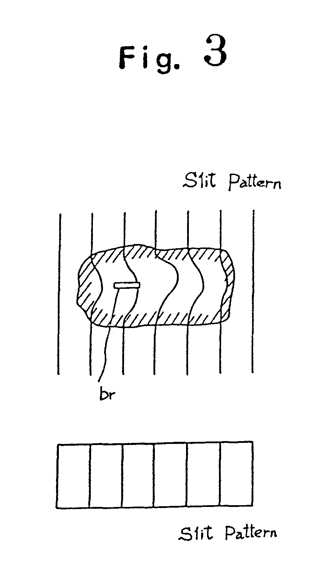

The lower part of Fig. 3 shows an arrangement of slits comprising an array of mutually parallel slits. When light is projected obliquely downwardly onto the article Q though this arrangement, because of the obliquity of the viewing direction in relation to the direction of projection of the light onto the article the line pattern, corresponding to the slits, that is formed on the article Q appears curved as viewed by the camera D, as shown in the upper part of Fig. 3.

The operational cycle of Fig. 5 comprises the following steps:

(1) The size of the image that is produced, by the television camera, of the slit pattern projected onto the article Q can be determined, by the data procesing system employed, only in terms of pixels. Accordingly, to enable the actual real-space size of the particle to be ascertained, a unit calibration step A1 is carried out to enable a value obtained in terms of pixels to be converted into an actual value expressed in terms of centimetres. For example, a white sheet of paper having a diameter A cm is imaged by the television camera, and the pixel value corresponding to the image which is A cm across is determined to compute the number of pixels in an area B cm². The result is used, in a step A5, for conversion of the article size value expressed in pixels into the corresponding value in cm³. As an example, a case will be considered in which A = 8 cm, so that B = 512 cm³.

(2) The original slit line positions (in the absence of the article Q) are stored as reference points for determining the heights of the slit lines on the article in a step A2.

(3) The deviations (deformed slit pattern) of the slits projected onto the article are measured, and the heights of the slits at positions where they are projected onto the article are computed according to the equation (1) in a step A3. The height of the article between two adjacent projected slits is regarded as remaining the same.

(4) The surface of the article where the slits are projected is imaged by the television camera to produce an image in terms of pixels. The volume of the upper half of the article is determined as the sum of the heights of the respective pixel positions in a step A4. In other words, the volume is found as the integral of pixel widths.

(5) Since the volume obtained from the image is defined by the pixels, it is then converted into a real-space value in cm³ in a step A5, using the calibrated values found in the step A1. For example, the volume found in terms of pixels in the step A4 is divided by the number of pixels corresponding to 512 cm³, and the result is multiplied by 512 to get the volume in cm³.

(6) The slit pattern is projected only downwardly onto the article. The shape of the lower half of the article is regarded as being the same as that of the upper half of the article. The overall volume of the article is corrected on the basis of this assumption in a step A6.

(7) The overall volume is multiplied by the apparent specific gravity of the article to find the weight in a step A7.

(8) The determined weight is output to the CRT K and/or the printer J in a step A8.

(9) A step A9 determines whether there is a next article to be processed or not. If there is a next article, then the steps A3 through A8 are repeated.

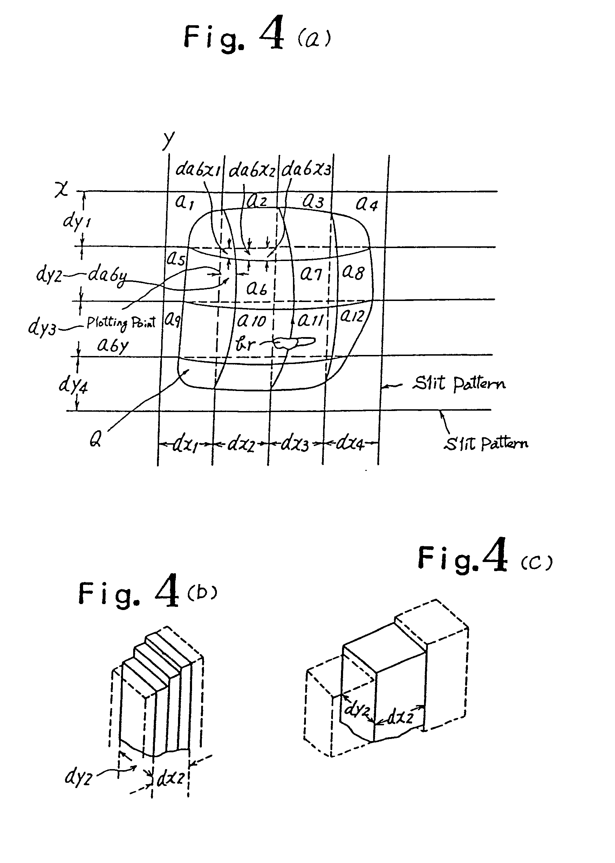

In the foregoing first embodiment, a parallel line array is used as the slit pattern. A second embodiment in which a grid-like pattern is employed as the slit pattern will be described with reference to Figs. 4a, 4b, and 4c, in which the slit plate S in Fig. 1a is replaced with a grid plate.

Fig. 4a shows the manner in which a grid slit pattern projected obliquely downwardly onto the article at an angle θ to the axis Z is curved on the article. Now, attention should be directed to an area a6, for example, among areas a1 through a10 defined by intersecting vertical and horizontal slit pattern lines. If the plotting point on a vertical slit line is a6y, then the deviation of the vertical slit line is da6y. The height ha6y of a prism having its bottom as the area a6 obtained from the information arising from the deviation of the vertical slit is given by:

$$ha6y = da6y \cdot \tan{(\pi - \theta)} \qquad (2)$$

The prism height ha6y may be subject to a large error if only the height of the plotting point is considered (according to the process of the first embodiment). In the second embodiment, therefore, the height of the prism having its bottom as the area a6 is found whilst taking account of the inclination, in the direction of Y, of the area a6 obtained from the information arising from the deviation of the vertical slit.

According to the second embodiment, more specifically, three plotting points a6x1, a6x2, a6x3, for example, are assumed on a horizontal slit, and the deviations of these plotting points are da6x1, da6x2, da6x3, respectively. The heights at these plotting points can be found from:

$$ha6x1 = da6x1 \tan{(\pi - \theta)} \qquad (3)$$
$$ha6x2 = da6x2 \tan{(\pi - \theta)} \qquad (4)$$
$$ha6x3 = da6x3 \tan{(\pi - \theta)} \qquad (5)$$

The volume model produced on the basis of the height information derived from the information of these plotting points is illustrated in Fig. 4b.

By determining the volume from the deviations of the vertical and horizontal slits, the weight of the article can be found more accurately than by projecting only parallel slits onto the article as shown in Fig. 1 and determining the volume with one slit-to-slit area regarded as one prism as shown in Fig. 4c.

The processing steps according to the second embodiment are substantially the same as those of the first embodiment, except that the equation used in the step A3 is different. The different equation will be described below, while the entire flowchart of the second embodiment will not be discussed, for the sake of brevity.

In the third step A3 as described above, the deviations (deformed slit pattern) of the slits projected onto the article are measured, and the positions of the slits where they are projected onto the article are computed at the plotting points in the X and Y directions according to the equations (2) through (5).

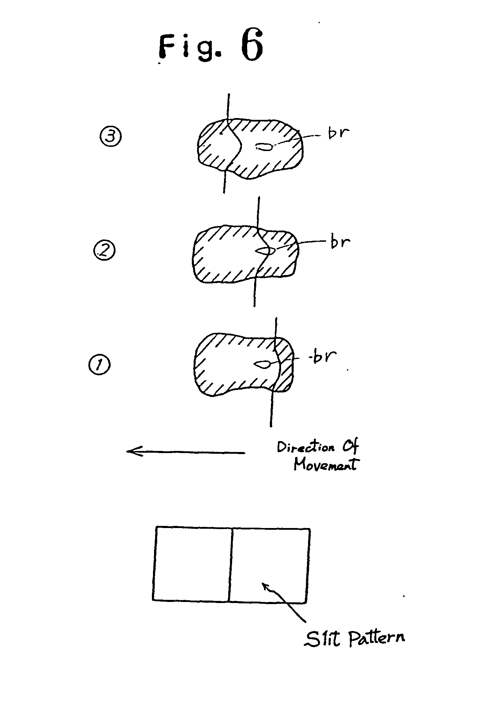

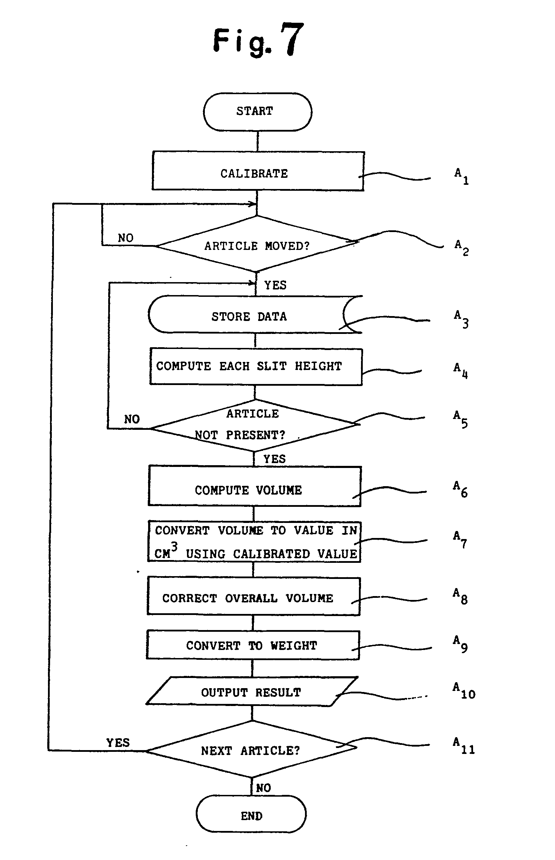

In the first and second embodiments, the slit pattern is projected onto the article Q as it is held at rest on the conveyor A for weight determination. According to a third embodiment, the weight of an article is determined while moving the article. The third embodiment will be described with reference to Figs. 6 and 7. In the third embodiment, a single slit is employed in place of the slit plate S having a parallel slit pattern.

In Fig. 6, a single slit is projected onto the article, and the article is moved in the direction of the arrow. The irregular surface of the article can be continuously detected by the manner in which the projected slit is curved as indicated by (1), (2), and (3). By varying the scanning speed of the slit, the computation can be performed at desired accuracy and the processing speed for weight determination can be improved as compared with the arrangement in which the parallel slit pattern is used as shown in Fig. 1b.

Fig. 7 is a flowchart of the processing steps of the third embodiment. The flowchart of Fig. 7 will be described below.

(1) The image produced by the television camera of the slit pattern projected onto the article is of a size that can be determined only in terms of the pixels. Therefore, the size of the article in the real space is required to be subject to unit calibration. A step A1 effects such unit calibration to find a value in centimeter corresponding to the pixel value. For example, a white sheet of paper having a diameter A cm is imaged by the television camera, and the pixel value corresponding to the image which is A cm across is determined to compute the number of pixels in an area B cm². The result is used for conversion of the article into the unit cm³ in a step A7. (As an example, A = 8 cm and B = 512 cm³).

(2) The article is then moved in a step A2, and data on the deviations (deformed slit pattern) of the slits on the surface of the article are stored in a step A3.

(3) Based on the stored data, the heights of the slits on the article are computed in a step A4 according to the equation (1). The steps A3, A4 are repeated until the article is moved out of the zone where the slit pattern is projected, in a step A5.

(4) The surface of the article where the slits are projected is imaged by the television camera to produce an image in terms of pixels. The volume of the upper half of the article is determined as the sum of the heights of the respective pixel positions in a step A6. In other words, the volume is found as the integral of pixel widths.

(5) Since the volume obtained from the image is defined by the pixels, it is then converted into the value in $cm^3$ in the real space in a step A7, using the calibrated values found in the step A1. For example, the volume found in terms of pixels in the step A4 is divided by the number of pixels corresponding to 512 $cm^3$, and the result is multiplied by 512 to get the volume in $cm^3$.

(6) The slit pattern is projected only downwardly onto the article. The shape of the lower half of the article is regarded as being the same as that of the upper half of the article. The overall volume of the article is corrected on the basis of this assumption in a step A8.

(7) The overall volume is multiplied by the apparent specific gravity of the article to find the weight in a step A9.

(8) The determined weight is output to the CRT K and/or the printer J in a step A10.

(9) A step 11 determines whether there is a next article to be processed or not. If there is a next article, then the steps A2 through A10 are repeated.

Preferred procedures for determining whether there is a surface flaw or defect on the article will be described with reference to Figs. 3, 4a, 6, 8, and 9.

As with the first through third embodiments, the slit pattern is projected onto the article, and imaged by the television camera D, in a fourth embodiment of the invention. The data of the slit line pattern imaged by the television camera D is differentiated repetitively at a constant sampling period, as described below, and the differential value obtained in each cycle is compared with that obtained in the preceding cycle. If the difference between the compared differential values is smaller than a preset reference value, the article's surface is regarded as being effectively flawless at the location concerned, but if the difference exceeds the preset reference value the article is regarded as having a flaw present on its surface.

Fig. 3 is illustrative of the fourth embodiment of the present invention.

When the parallel slit pattern is projected obliquely downwardly onto the article, the projected slit pattern is deformed, or deviated, into a deformed slit line pattern on an irregular surface region of the article as viewed. The heights of the slit lines at positions where they are projected onto the article can be determined on the basis of the slit line deviations according to the foregoing equation (1). At this time, the lines of the deformed slit pattern are effectively differentiated to obtain respective differential values, in relation to a predetermined coordinate system, at successive points therealong. If succesively obtained differential values are markedly different from one another, then an indication is provided that the article is regarded as having a surface flaw.

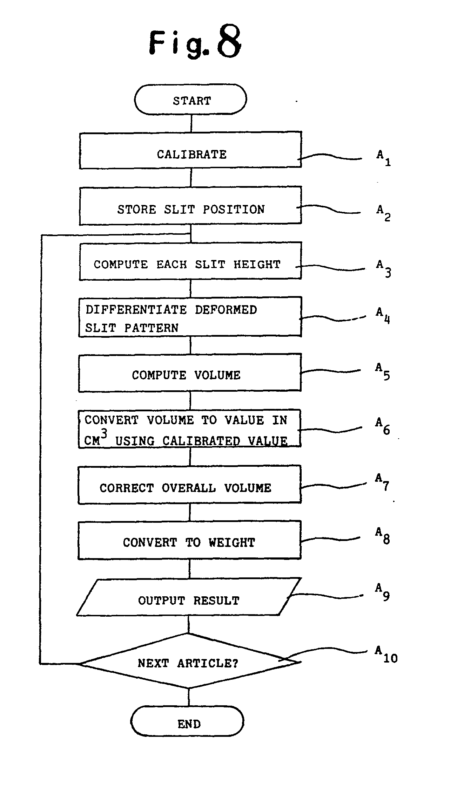

The flowchart of the processing steps of this fourth embodiment is illustrated in Fig. 8. The flowchart of Fig. 8 is substantially the same as that of Fig. 5 except that a step A4 is added. Therefore, the added step A4 only will now be described.

In the step A4, the data of the deformed slit pattern is differentiated, as described hereinbefore, at a constant sampling period to see how the deformed slit pattern is curved. The differential value obtained in one cycle is compared with the differential value produced in the preceding cycle. If but only if the difference between the compared differentials exceeds a preset reference value, then an indication is given that a significant flaw is present on the article's surface.

Fig. 4a may be regarded as illustrating a fifth embodiment, in which there is a flaw br, on the surface of the article, which makes the slit line pattern data discontinuous. If a differential difference detected as described hereinbefore is in excess of a preset reference value, then the article surface is classed as having a harmful flaw. In this embodiment, the slit pattern is differentiated only with respect to the Y direction. However, the slit pattern may be differentiated in the X direction only, or in both the X and Y directions, for such flaw detection.

The processing steps of the fifth embodiment are substantially the same as those in the flowchart of Fig. 8 illustrating the fourth embodiment. However, the step of computing each slit line height in the fourth embodiment corresponds to the step A3 of the first embodiment as described hereinbefore with reference to Fig. 5, whereas the step of computing each slit line height in the fifth embodiment corresponds to the step A3 of the second embodiment as described hereinbefore (also Fig. 5).

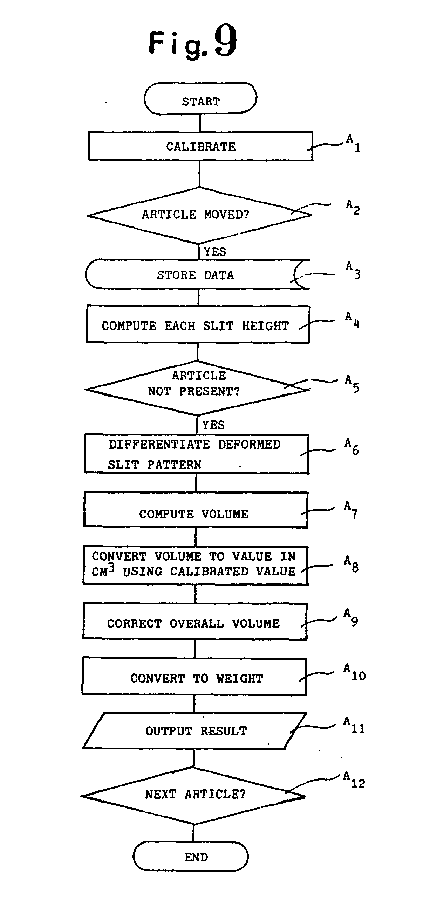

In a sixth embodiment, of which Fig. 6 may be taken as illustrative, there is a flaw br on the surface of the article, and the article is moved while the slit pattern data is differentiated at a fixed sampling period. If the differential difference is below a fixed value, then the article surface is determined as having no flaw, and if the difference is larger than the fixed value, then the article surface is determined as having a flaw. The processing steps of the sixth embodiment are illustrated in the flowchart of Fig. 9 which is different from the flowchart (Fig. 7) of the third embodiment in that a step A6 of differentiating the deformed slit pattern is added. Since the step A6 is the same as the step A4 of Fig. 8, the flowchart of the sixth embodiment will not be described in detail.

Seventh to tenth embodiments in which respective slit patterns are projected obliquely downwardly and obliquely upwardly onto an article for weight determination will be described below.

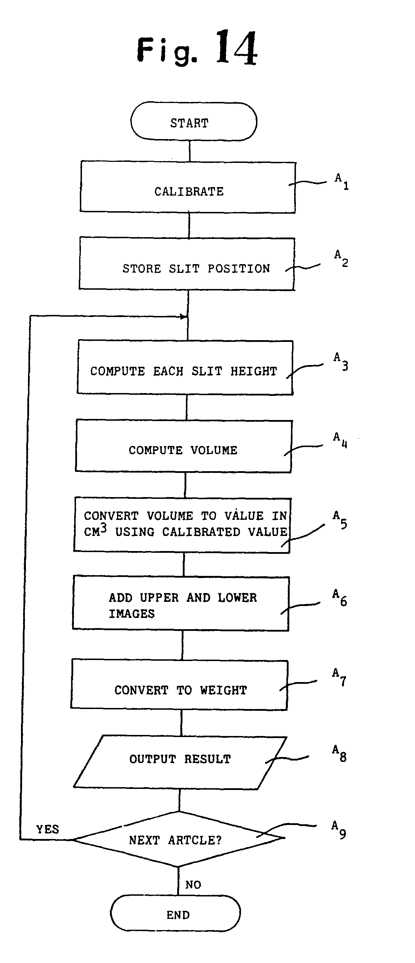

Fig. 10 is a block diagram of a system for measuring the weight of an article according to the processes of the seventh through tenth embodiments. The system includes slit projectors $C_1$, $C_2$ for upper and lower surfaces positioned obliquely upwardly and downwardly of the article Q placed on a support table (not shown), and reflecting mirrors $O_1$, $O_2$ for upper and lower surfaces for reflecting slit light projected from the slit projectors $C_1$, $C_2$ and reflected from the upper and lower surfaces of the article Q. The slit light reflected from the reflecting mirrors $O_1$, $O_2$ is detected by a television camera D. The slit projectors $C_1$, $C_2$ have slit pattern projection axes $\alpha_1$, $\alpha_2$, respectively, which intersect with each other at a point T on an optical axis Z extending perpendicularly to a horizontal plane HZ which divides the article Q into two halves. The image picked up by the television camera D is supplied to an A/D converter F and a monitor television receiver E. The A/D converter F converts the image into 256 × 256 8-bit pixels which are then stored in an image memory G. The image memory G is connected by a bus N to a floppy disk H, a main memory I, a printer J, a cathode-ray tube (CRT) K, a key-board L, and a central processing unit (CPU) M. The CPU M executes the cycle of operation indicated by the appropriate flowchart of Figs. 14 through 17 for determining the weight of the article Q.

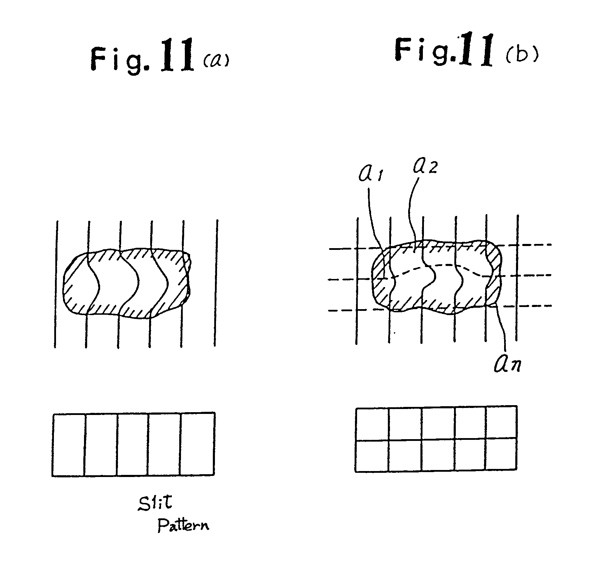

Figs. 11a and 11b are illustrative of the seventh embodiment. In Fig. 11a, the slit pattern comprises a parallel slit pattern, and in Fig. 11b, the slit pattern comprises a grid-form slit pattern. In Fig. 11b, the heights of areas a1 through an defined by vertical and horizontal slits intersecting with each other on the article are determined by correcting vertical slit data with horizontal slit data for determining the volume of the article. Therefore, the process of Fig. 11b can determine the weight of the article more accurately than the process of Fig. 11a. Stated otherwise, in case only vertical slit data is used, the height of one prism defined between two adjacent vertical slits is derived from the data obtained by one plotted point and remains the same. However, with horizontal slit data added, such one prism can be divided to determine different heights thereof based on the vertical and horizontal slit data.

Fig. 14 is a flowchart illustrative of the above-mentioned seventh embodiment, in which a parallel-line slit pattern is employed. The flowchart of Fig. 14 will be described below.

(1) The image produced by the television camera of the slit pattern projected onto the article is of a size that can be determined only in terms of the pixels. Therefore, the size of the article in the real space is required to be subject to unit calibration. A step A1 effects such unit calibration to find a value in centimeter corresponding to the pixel value. For example, a white sheet of paper having a diameter A cm is imaged by the television camera, and the pixel value corresponding to the image which is A cm across is determined to compute the number of pixels in an area B $cm^2$. The result is used for conversion of the article into the unit $cm^3$ in a step A5. (As an example, A = 8 cm and B = 512 $cm^3$).

(2) The original slit positions are stored as reference points for determining the heights of the slits on the article in a step A2.

(3) The deviations (deformed slit pattern) of the slits projected onto the upper and lower surfaces of the article are measured, and the heights of the slits at positions where they are projected onto the article (the heights from the point T to the upper and lower surfaces) are computed according to the equation (1) in a step A3. The height of the article between two adjacent projected slits is regarded as remaining the same.

(4) The surfaces of the article where the slits are projected are imaged by the television camera to produce images in terms of pixels. The volume of each of the upper and lower halves of the article is determined as the sum of the heights of the respective pixel positions in a step A4. In other words, the volume is found as the integral of pixel widths.

(5) Since the volume obtained from the image is defined by the pixels, it is then converted into the value in $cm^3$ in the real space in a step A5, using the calibrated values found in the step A1. For example, the volume found in terms of pixels in the step A4 is divided by the number of pixels corresponding to 512 $cm^3$, and the result is multiplied by 512 to get the volume in $cm^3$.

(6) The volumes of the article which have been derived from the slit patterns on the upper and lower surfaces of the article are added to obtain the entire volume in a step A6.

(7) The overall volume is multiplied by the apparent specific gravity of the article to find the weight in a step A7.

(8) The determined weight is output to the CRT K and/or the printer J in a step A8.

(9) A step A9 determines whether there is a next article to be processed or not. If there is a next article, then the steps A3 through A8 are repeated.

In the seventh embodiment, the slit pattern data is obtained while the article Q is held at rest. According to the eighth embodiment, the slit pattern data is obtained while the article is in motion.

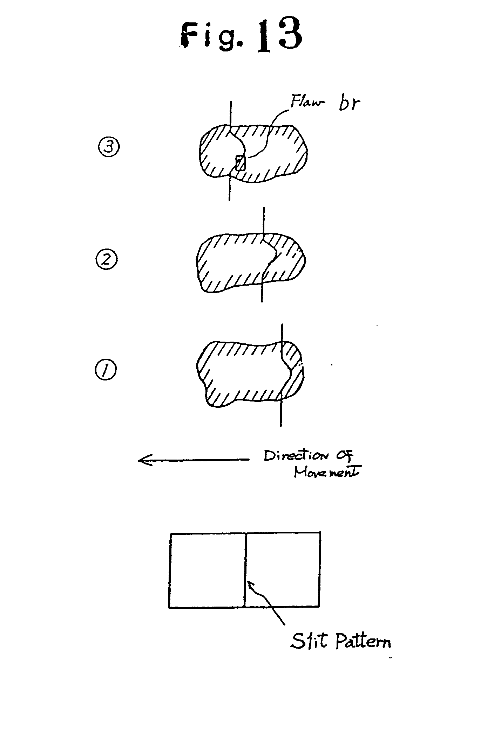

Fig. 13 illustrates the eighth embodiment. In this embodiment, two single slits are projected obliquely downwardly and upwardly, respectively, onto the article, and the article is moved in the direction of the arrow. The deformed or deviated slit pattern can be detected, at instants such as are illustrated at (1), (2), and (3), on the irregular surface of the article. By varying the scanning speed of the slit, the computation can be performed at desired accuracy and the processing speed for weight determination can be improved as compared with the arrangement in which the parallel slit pattern is used as shown in Fig. 11a according to the seventh embodiment.

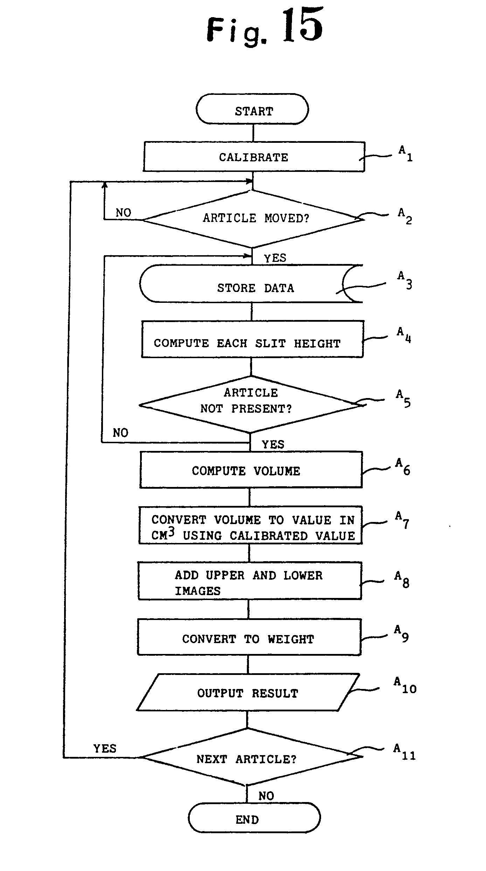

Fig. 15 is a flowchart of the processing steps of the eighth embodiment. The flowchart of Fig. 15 will be described below.

(1) The image produced by the television camera of the slit pattern projected onto the article is of size that can be determined only in terms of the pixels. Therefore, the size of the article in the real space is required to be subject to unit calibration. A step A1 effects such unit calibration to find a value in centimeter corresponding to the pixel value. For example, a white sheet of paper having a diameter A cm is imaged by the television camera, and the pixel value corresponding to the image which is A cm across is determined to compute the number of pixels in an area B $cm^2$. The result is used for conversion of the article into the unit $cm^3$ in a step A7. (As an example, A = 8 cm and B = 512 $cm^3$).

(2) The article is then moved in a step A2, and data on the deviations (deformed slit pattern) of the slits on the upper and lower surfaces of the article are stored in a step A3.

(3) Based on the stored data, the heights of the slits on the upper and lower surfaces of the article (the heights from the point T to the upper and lower surfaces) are computed in a step A4 according to the equation (1). The steps A3, A4 are repeated until the article is moved out of the zone where the slit pattern is projected, in a step A5.

(4) The surfaces of the article where the slits are projected are imaged by the television camera to product images in terms of pixels. The volume of each of the upper and lower halves of the article is determined as the sum of the heights of the respective pixel positions in a step A6. In other words, the volume is found as the integral of pixel widths.

(5) Since the volume obtained from the image is defined by the pixels, it is then converted into the value in $cm^3$ in the real space in a step A7, using the calibrated values found in the step A1. For example, the volume found in terms of pixels in the step A4 is divided by the number of pixels corresponding to 512 $cm^3$, and the result is multiplied by 512 to get the volume in $cm^3$.

(6) The volumes of the article which have been derived from the slit patterns on the upper and lower surfaces of the article are added to obtain the entire volume in a step A8.

(7) The overall volume is multiplied by the apparent specific gravity of the article to find the weight in a step A9.

(8) The determined weight is output to the CRT K and/or the printer J in a step A10.

(9) A step A11 determines whether there is a next article to be processed or not. If there is a next article, then the steps A2 through A10 are repeated.

Ninth and tenth embodiments including determining whether there is a surface flaw or defect on the article will be described below.

As with the fourth through sixth embodiments, the data of the slit pattern imaged by the television camera is differentiated at a constant sampling period. The differential is compared with the differential obtained in the preceding cycle. If the difference between the compared differentials is smaller than a fixed reference value, then no flaw is regarded as being present on the article surface, but if the difference exceeds the fixed value, then a flaw br is regarded as being present on the article surface.

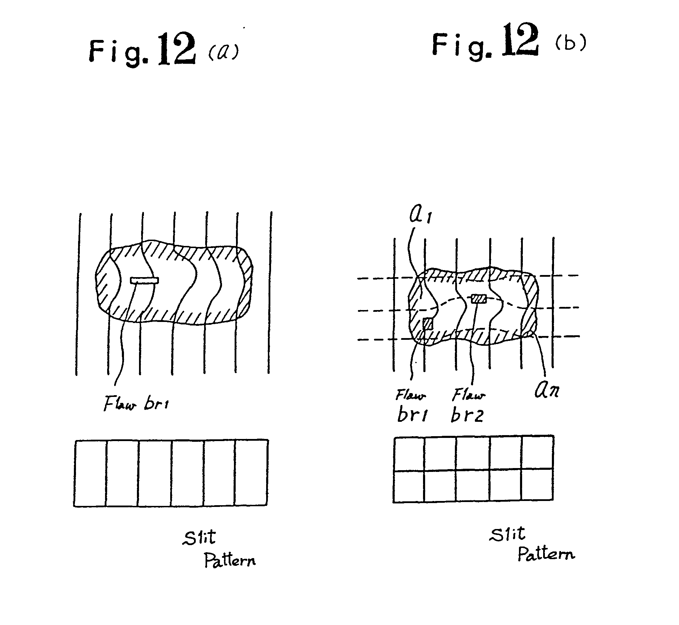

Figs. 12a and 12b are illustrative of the ninth embodiment of the present invention. In Fig. 12a, the parallel array slit pattern is projected onto the article. In this volume determination process, however, the height of each prism is derived from only one plotting point assigned to the prism and hence may be subject to a large error.

In Fig. 12b, the grid-form slit pattern is projected onto the article. The volume of a prism a1 among prisms a1 through an defined by vertical and horizontal slits is computed on the basis of the vertical slit pattern, whilst making allowance for the inclination of the upper surface of the prism, which is derived from information arising from the deviation of the horizontal slit pattern. Therefore, the volume and weight of the article can be determined more accurately than the process of Fig. 12a.

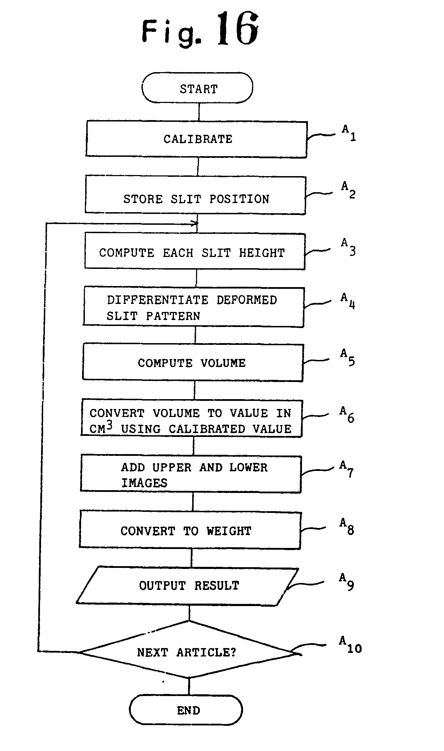

The processing steps of the ninth embodiment are illustrated in the flowchart of Fig. 16 which is different from the flowchart of Fig. 7 in that a step A4 of differentiating the deformed slit pattern is added. Since the step A4 is the same as the step A4 of Fig. 8, the flowchart of the ninth embodiment will not be described in detail.

Fig. 13 is also illustrative of the tenth embodiment of the present invention. In the tenth embodiment, two slits are projected obliquely downwardly and upwardly, respectively, onto the article while the article is moved in the direction of the arrow. The deformed or deviated slit pattern can be detected as indicated by (1), (2), and (3) on the irregular surface of the article. By varying the scanning speed of the slit, the computation can be performed at desired accuracy and the processing speed for volume and weight determination can be improved as compared with the arrangement in which the parallel slit pattern is used as shown in Fig. 12a.

According to the tenth embodiment, the slit pattern data picked up by the television camera from the upper and lower surfaces of the article are differentiated at a constant sampling period. The differential is compared with that in the preceding cycle. If the difference between the compared differentials is smaller than a fixed reference value, the surfaces of the article are determined as having no flaw.

In Fig. 12b, there is a flaw br on the surface of the article that makes the slit pattern data discontinuous. If the differential difference is in excess of a fixed reference value, then the surface of the article is determined as having a harmful flaw.

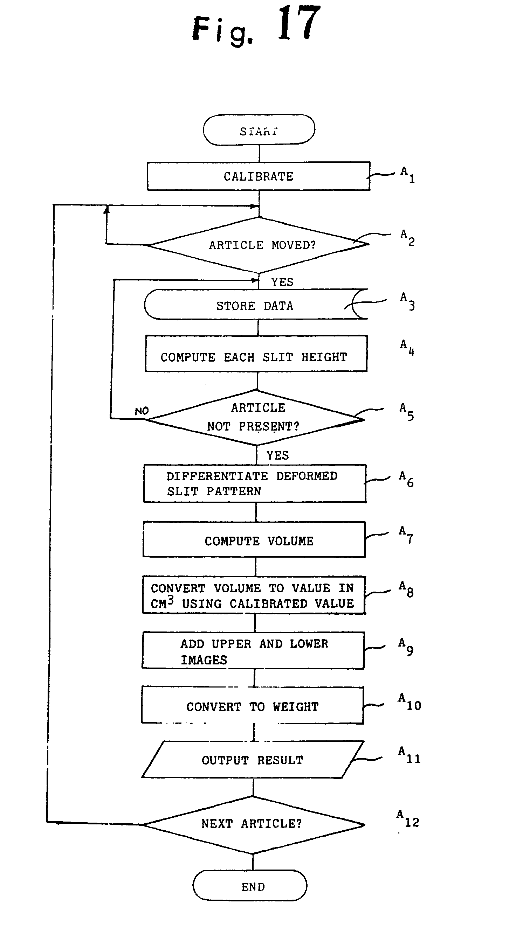

The processing steps of the tenth embodiment are illustrated in the flowchart of Fig. 17 which is different from the flowchart of Fig. 15 in that a step A6 of differentiating the deformed slit pattern is added. Since the step A6 is the same as the step A4 of Fig. 8, the flowchart of the tenth embodiment will not be described in detail.

Although certain prefered embodiments have been shown and described, it should be understood that many changes and modifications may be made therein without departing from the scope of the appended claims.

## Claims

1. Apparatus for assessing the volume of an article, comprising:

a light source (P) arranged for projecting light obliquely downwardly through an arrangement of one or more slits (S) to be incident on the said artcle (Q), when the apparatus is in use, so as to provide a line pattern on a surface region of the article;

data production means (D, F, G), including a television camera (D) arranged for receiving light leaving the said surface region in an imaging direction (Z) oblique to the direction of projection of the light onto the article, for producing image data representative of the said line pattern as viewed by the camera; and

data processing means (M) connected for employing the said image data, when the apparatus is in use, to compute the respective distances (h) from a predetermined reference plane of a plurality of points, on the said surface region, through which the said line pattern passes, and to derive from the computed respective distances a measure of the volume of the article.

2. Apparatus as claimed in claim 1, wherein the said data processing means is operable to multiply the derived measure of the volume by a specific gravity value, thereby to obtain a measure of the weight of the article.

3. Apparatus as claimed in claim 1 or 2, wherein the said arrangement comprises an array of mutually parallel slits, so that the said line pattern comprises a plurality of lines.

4. Apparatus as claimed in claim 1 or 2, wherein the said arrangement comprises a grid-like arrangement of slits, so that the said line pattern comprises first and second pluralities of lines such that the lines of the first plurality are crossed by the lines of the second plurality.

5. Apparatus as claimed in any preceding claim, including conveyor means (A) for moving the said article, relative to the said television camera and the said one or more slits and the said light source, during the production of the said image data, in a direction parallel to the said reference plane.

6. Apparatus as claimed in claim 1 or 2, wherein the said arrangement comprises just one slit, so that the said line pattern comprises a single line; the apparatus including conveyor means (A) for moving the said article, relative to the said television camera and the said one or more slits and the said light source, during the production of the said image data, in a direction parallel to the said reference plane.

7. Apparatus as claimed in any preceding claim, wherein the said data processing means are operable to carry out a cyclically repeated differentiation and comparison step in which respective differential values for a line of the said line pattern are computed, in relation to a predetermined coordinate system, at successive points along that line, the successively determined differential values are compared with one another, and an indication of the existence of a flaw (br) on the surface of the article is provided if the comparison reveals a difference, between one such differential value and the next, that is greater than a preset reference value.

8. Apparatus as claimed in any preceding claim, further comprising:

a second light source, arranged for projecting light through a second arrangement of one or more slits to be incident on the said article so as to provide a line pattern on a second surface region of the article, the surface region of claim 1 and the said second surface region being disposed to opposite sides respectively of a plane (HZ) that substantially bisects the article and extends parallel to the said reference plane; and

means $(O_2)$ for causing the said television camera (D) to receive light leaving the said second surface region in an imaging direction opposite to that of claim 1 and oblique to the direction of projection of the light onto the article via the said second arrangement;

the said data production means (D, F, G) being operative to produce further image data, representative of the said second line pattern as viewed by the camera, and the said data processing means (M) being operative to employ that further image data to compute the respective distances from a predetermined reference plane of a plurality of points, on the said second surface region, through which the said second line pattern passes, which computed respective distances are also employed in deriving the said measure of the volume of the article when the apparatus is in use.

9. Apparatus as claimed in claim 8, wherein two mirrors $(O_1, O_2)$ are arranged, disposed to opposite sides respectively of the position to be occupied by the article when the apparatus is in use, for directing onto the television camera the light leaving the article respectively in the two imaging directions.

10. A method of assessing the volume of an article, comprising the steps of:

projecting light obliquely downwardly through an arrangement of one or more slits (S) to be incident on the said article so as to provide a line pattern on a surface region of the article (Q);

employing a television camera (D) to receive light leaving the said surface region, in an imaging direction oblique to the direction of projection of the light onto the article, and to produce therefrom image data representative of the said line pattern as viewed by the camera;

employing the said image data to compute the respective distances (h) from a predetermined reference plane of a plurality of points, on the said surface region, through which the said line pattern passes; and

deriving from the computed respective distances a measure of the volume of the article.

11. A method as claimed in claim 10, wherein the said refernece plane extends horizontally and the said imaging direction is vertical.

12. A method as claimed in claim 10 or 11, using apparatus as claimed in any one of claims 2 to 7.

13. A method as claimed in claim 10 or 11, wherein:

light is projected through a second arrangement of one or more slits to be incident on the said article so as to provide a line pattern on a second surface region of the article, the surface region of claim 10 and the said second surface region being disposed to opposite sides respectively of a plane (HZ) that substantially bisects the article and extends parallel to the said reference plane;

the said television camera (D) is employed also to receive light leaving the said second surface region, in an imaging direction opposite to that of claim 10 and oblique to the direction of projection of the light onto the article via the said second arrangement, and to produce therefrom further image data, representative of the said second line pattern as viewed by the camera; and

the said further image data is employed to compute the respective distances from a predetermined reference plane of a plurality of points, on the said second surface region, through which the said second line pattern passes, which computed respective distances are also employed in deriving the said measure of the volume of the article.

14. A method as claimed in claim 13, using apparatus as claimed in claim 9.

**Patentansprüche**

1. Vorrichtung zum Bestimmen des Volumens eines Artikels, mit

einer Lichtquelle (P), die, beim Betrieb der Vorrichtung, Licht schräg nach unten durch eine Anordnung aus einem oder mehreren Schlitzen (S) so projiziert, daß dieses auf den Artikel (Q) fällt, um ein Linienmuster auf einem Bereich der Oberfläche des Artikels zu erzeugen;

einer Datenerzeugungseinrichtung (D, F, G) mit einer Fernsehkamera (D) zum Empfang von Licht, welches den Bereich der Oberfläche in einer Abbildungsrichtung (Z) schräg zur Projektionsrichtung des Lichtes auf den Artikel verläßt, zum Erzeugen von Bilddaten, welche das von der Kamera gesehene Linienmuster wiedergeben; und

einer Datenverarbeitungseinrichtung (M), welche beim Betrieb der Vorrichtung die Bilddaten verwendet, um die jeweiligen Abstände (h) zwischen einer vorbestimmten Referenzebene und mehreren auf dem Bereich der Oberfläche befindlichen Punkten, durch welche das Linienmuster geht, zu berechnen und um aus den jeweiligen berechneten Abständen ein Maß des Volumens des Artikels abzuleiten.

2. Vorrichtung nach Anspruch 1, bei der die Datenverarbeitungseinrichtung zum Multiplizieren des abgeleiteten Maßes des Volumens mit einem Dichte-Wert betriebbar ist, um so ein Maß des Gewichts des Artikels zu erhalten.

3. Vorrichtung nach Anspruch 1 oder 2, bei der die Anordnung eine Reihe von zueinander parallelen Schlitzen aufweist, so daß das Linienmuster mehrere Linien umfaßt.

4. Vorrichtung nach Anspruch oder 2, bei der die Anordnung eine gitterähnliche Anordnung von Schlitzen umfaßt, so daß das Linienmuster eine erste und eine zweite Mehrzahl von Linien aufweist, derart, daß die Linien der ersten Mehrzahl von den Linien der zweiten Mehrzahl gekreuzt werden.

5. Vorrichtung nach einem der vorhergehenden Ansprüche mit einer Fördereinrichtung (A) zum Bewegen des Artikels relativ zu der Fernsehkamera, dem einen oder mehreren Schlitzen und der Lichtquelle in einer zu der Referenzebene parallelen Richtung während der Erzeugung der Bilddaten.

6. Vorrichtung nach Anspruch 1 oder 2, bei der die Anordnung lediglich einen Schlitz aufweist, so daß das Linienmuster aus einer einzigen Linie besteht; wobei die Vorrichtung eine Fördereinrichtung (A) zum Bewegen des Artikels relativ zu der Fernsehkamera, dem einen oder mehreren Schlitzen und der Lichtquelle in einer zu der Referenzebene parallelen Richtung während der Erzeugung der Bilddaten aufweist.

7. Vorrichtung nach einem der vorhergehenden Ansprüche, bei der die Datenverarbeitungseinrichtung zur Durchführung eines zyklisch wiederholten Differenzierungs- und Vergleichsschrittes betriebbar ist, in welchem jeweilige Differentialwerte für eine Linie des Linienmusters in Relation zu einem vorbestimmten Koordinatensystem an aufeinanderfolgenden Punkten der Linie berechnet werden, die nacheinander bestimmten Differentialwerte miteinander verglichen werden und eine Anzeige des Vorhandenseins eines Fehlers (br) an der Oberfläche des Artikels geliefert wird, wenn der Vergleich eine Differenz zwischen einem der Differentialwerte und dem nächsten ergibt, die größer als ein voreingestellter Referenzwert ist.

8. Vorrichtung nach einem der vorhergehenden Ansprüche, ferner mit

einer zweiten Lichtquelle, die Licht durch eine zweite Anordnung von einem oder mehreren Schlitzen auf einen Artikel projiziert, um ein Linienmuster auf einem zweiten Bereich der Oberfläche des Artikels zu erzeugen, wobei der Bereich der Oberfläche von Anspruch 1 und der zweite Bereich der Oberfläche jeweils an gegenüberliegenden Seiten einer Ebene (HZ) angeordnet sind, welche den Artikel im wesentlichen halbiert und sich parallel zur Referenzebene erstreckt; und

einer Einrichtung (O$_2$), welche bewirkt, daß die Fernsehkamera (D) Licht empfängt, welches den zweiten Bereich der Oberfläche in einer Abbildungsrichtung verläßt, die der Richtung von Anspruch 1 entgegengesetzt ist und schräg zu der Projektionsrichtung des Lichtes auf den Artikel über die zweite Anordnung verläuft;
wobei die Datenerzeugungseinrichtung (D, F, G) zur Erzeugung weiterer Bilddaten betreibbar ist, welche das zweite Linienmuster wiedergeben, wie es von der Kamera gesehen wird, und wobei die Datenverarbeitungseinrichtung (M) zur Verwendung dieser weiteren Bilddaten betreibbar ist, um die jeweiligen Abstände zwischen einer vorbestimmten Referenzebene und einer Mehrzahl von Punkten auf dem zweiten Bereich der Oberfläche, durch welche das zweite Linienmuster geht, zu berechnen, wobei die berechneten jeweiligen Abstände beim Gebrauch der Vorrichtung ebenfalls zur Ableitung des Maßes des Volumens des Artikels benutzt werden.

9. Vorrichtung nach Anspruch 8, bei der zwei Spiegel (O$_1$, O$_2$) vorgesehen sind, die jeweils auf zu der von dem Artikel beim Gebrauch der Vorrichtung einzunehmenden Position entgegengesetzten Seiten angeordnet sind, um das den Artikel jeweils in die beiden Abbildungsrichtungen verlassende Licht auf die Fernsehkamera zu richten.

10. Verfahren zum Bestimmen des Volumens eines Artikels, mit den folgenden Schritten:

Projizieren von Licht schräg nach unten durch eine Anordnung aus einem oder mehreren Schlitzen (S), so daß dieses auf den Artikel fällt, um ein Linienmuster auf einem Bereich der Oberflache des Artikels (Q) zu erzeugen;

Verwenden einer Fernsehkamera (D) zum Empfang von Licht, welches den Bereich der Oberfläche in einer Abbildungsrichtung schräg zur Projektionsrichtung des Lichtes auf den Artikel verläßt, und Erzeugen von Bildaten daraus, welche das von der Kamera gesehene Linienmuster wiedergeben;

Verwenden der Bilddaten, um die jeweiligen Abstände (h) zwischen einer vorbestimmten Referenzebene und mehreren auf dem Bereich der Oberfläche befindlichen Punkten, durch welche das Linienmuster geht, zu berechnen; und

Ableiten des Maßes des Volumens des Artikels aus den berechneten jeweiligen Abständen.

11. Verfahren nach Anspruch 10, bei dem sich die Referenzebene horizontal erstreckt und die Abbildungsrichtung vertikal ist.

12. Verfahren nach Anspruch oder 11 unter Verwendung der Vorrichtung nach einem der Ansprüche 2 bis 7.

13. Verfahren nach Anspruch 10 oder 11, bei dem

Licht durch eine zweite Anordnung von einem oder mehreren Schlitzen auf einen Artikel projiziert wird, um ein Linienmuster auf einem zweiten Bereich der Oberfläche des Artikels zu erzeugen, wobei der Bereich der Oberfläche von Anspruch 10 und der zweite Bereich der Oberfläche jeweils an gegenüberliegenden Seiten einer Ebene (HZ) angeordnet sind, welche den Artikel im wesentlichen halbiert und sich parallel zur Referenzebene erstreckt;

die Fernsehkamera (D) dazu verwendet wird, ebenfalls Licht zu empfangen, welches den zweiten Bereich der Oberfläche in einer Abbildungsrichtung verläßt, die der Richtung von Anspruch 10 entgegengesetzt ist und schräg zu der Projektionsrichtung des Lichtes auf den Artikel über die zweite Anordnung verläuft, und weitere Bilddaten zu erzeugen, welche das zweite Linienmuster wiedergeben, wie es von der Kamera gesehen wird; und

die weiteren Bilddaten zur Berechnung der jeweiligen Abstände zwischen einer vorbestimmten Referenzebene und einer Mehrzahl von Punkten auf dem zweiten Bereich der Oberfläche, durch welche das zweite Linienmuster geht, verwendet werden, wobei die berechneten jeweiligen Abstände ebenfalls zur Ableitung des Maßes des Volumens des Artikels benutzt werden.

14. Verfahren nach Anspruch 13 unter Verwendung einer Vorrichtung nach Anspruch 9.

**Revendications**

1. Appareil pour déterminer le volume d'un article, comprenant:

une source (P) de lumière disposée de manière à projeter de la lumière obliquement vers le bas, à travers un agencement d'une ou plusieurs fentes (S), pour qu'elle tombe sur ledit article (Q), quand l'appareil est en service, afin de former un dessin de ligne(s) sur une région superficielle de l'article;

des moyens (D, F, G) de production de données comprenant une caméra (D) de télévision disposée de manière à recevoir la lumière quittant la région superficielle dans une direction (Z) de formation d'image, oblique par rapport à la direction de projection de la lumière sur l'article, afin de produire des données d'image représentatives du dessin de ligns(s) tel qu'il est vu par la caméra; et

un moyen (M) de traitement de données connecté de manière à utiliser les données d'image, lorsque l'appareil est en service, pour calculer les distances respectives (h) auxquelles se trouvent, par rapport à un plan de référence prédéterminé, une pluralité de points présents sur ladite région superficielle et par lesquels passe le dessin de ligne(s), et pur déduire à partir des distances respectives calculées une mesure du volume de l'article.

2. Appareil selon la revendication 1, dans lequel le moyen de traitement de données est apte à fonctionner de manière à multiplier la mesure du volume, telle que déduite, par une valeur de poids spécifique pur obtenir ainsi une mesure du poids de l'article.

3. Appareil selon la revendication 1 ou 2, dans lequel ledit agencement comprend une rangée de fentes mutuellement parallèles, de sorte que le dessin de ligne(s) comprend une pluralité de lignes.

4. Appareil selon la revendication 1 ou 2, dans lequel ledit agencement comprend une combinaison de fentes, analogue à une grille, de sorte que le dessin de ligne(s) comprend des première et seconde pluralités de lignes de manière telle que les lignes de la première pluralité sont coupées par les lignes de la seconde pluralité.

5. Appareil selon l'une quelconque des revendications précédentes, comprenant un moyen transporteur (A) pour déplacer l'article par rapport à la caméra de télévision ainsi que par rapport à la fente ou aux fentes et à la source de lumière, pendant la production des données d'image, dans une direction parallèle audit plan de référence.

6. Appareil selon les revendications 1 ou 2, dans lequel ledit agencement comprend une, seule fente, de sorte que le dessin de ligne(s) comprend une seule ligne, l'appareil comprenant un moyen transporteur (A) pour déplacer l'article par rapport à la caméra de télévision et par rapport à la fente et à la source de lumière, pendant la production des données d'image, dans une direction parallèle au plan de référence.

7. Appareil selon l'une quelconque des revendications précédentes, dans lequel les moyens de traitement de données sont aptes à fonctionner de manière à effectuer une opération de différentiation et de comparaison, répétée de façon cyclique, au cours de laquelle les valeurs différentielles respectives pour une ligne du dessin de ligne(s) sont calculées, par rapport à un système de coordonnées prédéterminé, en des points successifs le long de cette ligne, les valeurs différentielles déterminées successivement sont comparées l'une avec l'autre et une indication de l'existence d'une défectuosité (br) sur la surface de l'article est fournie si la comparaison révèle qu'il existe entre une de ces valeurs différentielles et la valeur suivante une différence qui est supérieure à une valeur de référence prédéfinie.

8. Appareil selon l'une quelconque des revendications précédentes, comprenant en outre:

une seconde source de lumière disposée de manière à projeter de la lumière à travers un second agencement d'une ou plusieurs fentes pour qu'elle tombe sur ledit article afin de former un dessin de ligne(s) sur une seconde région superficielle de l'article, la région superficielle mentionnée dans la revendication 1 et cette seconde région superficielle étant disposées de part et d'autre, respectivement, d'un plan (HZ) qui coupe sensiblement en deux l'article et s'étend parallèlement audit plan de référence; et

un moyen ($O_2$) pour faire en sorte que la caméra (D) de télévision reçoive la lumière quittant la seconde région superficielle dans une direction de formation d'image opposée à celle mentionnée dans la revendication 1 et oblique par rapport à la direction de projection de la lumière sur l'article à travers ledit second agencement;

les moyens (D, F, G) de production de données étant aptes à fonctionner de manière à produire d'autres données d'images représentatives du second dessin de ligne(s) tel qu'il est vu par la caméra, et le moyen (M) de traitement de données étant apte à fonctionner de manière à utiliser ces autres données d'image pour calculer les distances respectives auxquelles se trouvent, par rapport à un plan de référence prédéterminé, une pluralité de points présents sur la seconde région superficielle et par lesquels passe le second dessin de ligne(s), ces distances respectives calculées étant aussi utilisées pour déduire ladite mesure du volume de l'article lorsque l'appareil est en service.

9. Appareil selon la revendication 8, dans lequel deux miroirs ($O_1$, $O_2$) sont disposés, en étant placés de part et d'autre respectivement de l'endroit devant être occupé par l'article lorsque l'appareil est en service, de manière à diriger sur la caméra de télévision la lumière quittant l'article respectivement dans les deux directions de formation d'image.

10. Procédé de détermination du volume d'un article, comprenant les étapes consistant:

à projeter de la lumière obliquement vers le bas, à travers un agencement d'une ou plusieurs fentes (S), pour qu'elle tombe sur ledit article de manière à former un dessin de ligne(s) sur une région superficielle de l'article (Q);

à utiliser une caméra (D) de télévision pour recevoir la lumière quittant ladite région superficielle, dans une direction de formation d'image oblique par rapport à la direction de projection de la lumière sur l'article et pour produire à partir de cette lumière des données d'image représentatives du dessin de ligne(s) tel qu'il est vu par la caméra;

à utiliser lesdites données d'image pour calculer les distances respectives (h) auxquelles se trouvent, par rapport à un plan de référence prédéterminé, une pluralité de points présents sur ladite région superficielle et par lesquels passe le desin de ligne(s); et

à déduire à partir des distances respectives calculées une mesure du volume de l'article.

11. Procédé selon la revendication 10, dans lequel le plan de référence s'étend horizontalement et la direction de formation d'image est verticale.

12. Procédé selon la revendication 10 ou 11, utilisant un appareil selon l'une quelconque des revendications 2 à 7.

13. Procédé selon la revendication 10 ou 11, dans lequel:

une lumière est projetée à travers un second agencement d'une ou plusieurs fentes pour qu'elle tombe sur l'article de manière à former un dessin de ligne(s) sur une seconde région superficielle de l'article, la région superficielle mentionnée dans la revendication 10 et ladite seconde région superficielle étant disposées de part et d'autre, respectivement, d'un plan (HZ) qui coupe sensiblement en deux l'article et s'étend parallèlement audit plan de référence.

la caméra (D) de télévision est utilisée aussi pour recevoir la lumière quittant la seconde région superficielle, dans une direction de formation d'image opposée à celle mentionnée dans la revendication 10 et oblique par rapport à la direction de projection de la lumière sur l'article à travers le second agencement, et pour produire à partir de cette lumière d'autres données d'image représentatives du second dessin de ligne(s) tel qu'il est vu par la caméra; et

lesdites autres données d'image sont utilisées pour calculer les distances respectives auxquelles se trouvent, par rapport à un plan de référence prédéterminé, une pluralité de points présents sur la seconde région superficielle et par lesquels passe le second dessin de ligne(s), ces distances respectives calculées étant aussi utilisées pour déduire ladite mesure du volume de l'article.

14. Procédé selon la revendication 13, utilisant un appareil selon la revendication 9.

# Fig. 1 (a)

# Fig. 1 (b)

# Fig. 2

# Fig. 3

Slit Pattern

br

Slit Pattern

# Fig. 4 (a)

# Fig. 4 (b)

# Fig.4 (c)

# Fig. 5

```
                    ┌──────────┐
                    │  START   │
                    └──────────┘
                          │
              ┌───────────────────────┐
              │       CALIBRATE        │─────⌇─────  A₁
              └───────────────────────┘
                          │
              ┌───────────────────────┐
              │   STORE SLIT POSITION  │─────⌇─────  A₂
              └───────────────────────┘
                          │
              ┌───────────────────────┐
              │ COMPUTE EACH SLIT HEIGHT│────⌇─────  A₃
              └───────────────────────┘
                          │
              ┌───────────────────────┐
              │     COMPUTE VOLUME     │─────⌇─────  A₄
              └───────────────────────┘
                          │
              ┌───────────────────────┐
              │ CONVERT VOLUME TO VALUE IN │──⌇──  A₅
              │ CM³ USING CALIBRATED VALUE │
              └───────────────────────┘
                          │
              ┌───────────────────────┐
              │  CORRECT OVERALL VOLUME │────⌇─────  A₆
              └───────────────────────┘
                          │
              ┌───────────────────────┐
              │   CONVERT TO WEIGHT    │─────⌇─────  A₇
              └───────────────────────┘
                          │
              ╱───────────────────────╱
             ╱     OUTPUT RESULT      ╱──────⌇─────  A₈
            ╱───────────────────────╱
                          │
        YES         ◇───────────◇
       ◄────────────  NEXT ARTICLE?  ────⌇────  A₉
                     ◇───────────◇
                          │ NO
                    ┌──────────┐
                    │   END    │
                    └──────────┘
```

$A_1$ CALIBRATE

$A_2$ STORE SLIT POSITION

$A_3$ COMPUTE EACH SLIT HEIGHT

$A_4$ COMPUTE VOLUME

$A_5$ CONVERT VOLUME TO VALUE IN $CM^3$ USING CALIBRATED VALUE

$A_6$ CORRECT OVERALL VOLUME

$A_7$ CONVERT TO WEIGHT

$A_8$ OUTPUT RESULT

$A_9$ NEXT ARTICLE?

# Fig. 6

③ — br

② — br

① — br

←      Direction Of Movement

Slit Pattern

# Fig. 7

```
          ┌─────────┐
          │  START  │
          └─────────┘
               │
        ┌──────────────────┐
        │    CALIBRATE     │ ────────  A₁
        └──────────────────┘
               │
          ╱─────────────╲
    NO   ╱ ARTICLE MOVED? ╲ ──────  A₂
  ◄─────╲                 ╱
          ╲─────────────╱
               │ YES
        ┌──────────────────┐
        │    STORE DATA    │ ────────  A₃
        └──────────────────┘
               │
        ┌──────────────────────┐
        │ COMPUTE EACH SLIT HEIGHT │ ──  A₄
        └──────────────────────┘
               │
          ╱─────────────╲
    NO   ╱   ARTICLE      ╲ ──────  A₅
  ◄─────╲  NOT PRESENT?   ╱
          ╲─────────────╱
               │ YES
        ┌──────────────────┐
        │  COMPUTE VOLUME  │ ────────  A₆
        └──────────────────┘
               │
        ┌──────────────────────────┐
        │ CONVERT VOLUME TO VALUE IN │ ──  A₇
        │ CM³ USING CALIBRATED VALUE │
        └──────────────────────────┘
               │
        ┌──────────────────────┐
        │ CORRECT OVERALL VOLUME │ ──  A₈
        └──────────────────────┘
               │
        ┌──────────────────┐
        │ CONVERT TO WEIGHT │ ───────  A₉
        └──────────────────┘
               │
        ╱──────────────────╱
       ╱   OUTPUT RESULT   ╱ ──────  A₁₀
      ╱──────────────────╱
               │
          ╱─────────────╲
   YES   ╱ NEXT ARTICLE?  ╲ ──────  A₁₁
  ◄─────╲                 ╱
          ╲─────────────╱
               │ NO
          ┌─────────┐
          │   END   │
          └─────────┘
```

# Fig. 8

```
        ( START )

    CALIBRATE                          A₁

    STORE SLIT POSITION                A₂

    COMPUTE EACH SLIT HEIGHT           A₃

    DIFFERENTIATE DEFORMED
    SLIT PATTERN                       A₄

    COMPUTE VOLUME                     A₅

    CONVERT VOLUME TO VALUE IN
    CM³ USING CALIBRATED VALUE         A₆

    CORRECT OVERALL VOLUME             A₇

    CONVERT TO WEIGHT                  A₈

    OUTPUT RESULT                      A₉

    NEXT ARTICLE?                      A₁₀

        ( END )
```

8

EP 0 178 090 B1

# Fig.9

```
        ┌─────────┐
        │  START  │
        └────┬────┘
             │
  ┌──────────┴──────────┐
  │      CALIBRATE      │────  A₁
  └──────────┬──────────┘
             │
       ╱─────┴─────╲
      ╱  ARTICLE    ╲────  A₂
      ╲   MOVED?    ╱
       ╲─────┬─────╱
          YES │
  ┌──────────┴──────────┐
  │     STORE DATA      │────  A₃
  └──────────┬──────────┘
             │
  ┌──────────┴──────────┐
  │ COMPUTE EACH SLIT   │────  A₄
  │       HEIGHT        │
  └──────────┬──────────┘
             │
       ╱─────┴─────╲
      ╱   ARTICLE   ╲────  A₅
      ╲ NOT PRESENT?╱
       ╲─────┬─────╱
          YES │
  ┌──────────┴──────────┐
  │ DIFFERENTIATE       │────  A₆
  │ DEFORMED SLIT       │
  │     PATTERN         │
  └──────────┬──────────┘
             │
  ┌──────────┴──────────┐
  │   COMPUTE VOLUME    │────  A₇
  └──────────┬──────────┘
             │
  ┌──────────┴──────────┐
  │ CONVERT VOLUME TO   │────  A₈
  │ VALUE IN CM³ USING  │
  │  CALIBRATED VALUE   │
  └──────────┬──────────┘
             │
  ┌──────────┴──────────┐
  │ CORRECT OVERALL     │────  A₉
  │      VOLUME         │
  └──────────┬──────────┘
             │
  ┌──────────┴──────────┐
  │  CONVERT TO WEIGHT  │────  A₁₀
  └──────────┬──────────┘
             │
  ╱──────────┴──────────╲
 ╱    OUTPUT RESULT      ╱────  A₁₁
 ╲──────────┬──────────╱
            │
       ╱─────┴─────╲
      ╱    NEXT     ╲────  A₁₂
      ╲  ARTICLE?   ╱
       ╲─────┬─────╱
             │
        ┌────┴────┐
        │   END   │
        └─────────┘
```

Blocks of Fig. 9:

- CALIBRATE — $A_1$
- ARTICLE MOVED? — $A_2$
- STORE DATA — $A_3$
- COMPUTE EACH SLIT HEIGHT — $A_4$
- ARTICLE NOT PRESENT? — $A_5$
- DIFFERENTIATE DEFORMED SLIT PATTERN — $A_6$
- COMPUTE VOLUME — $A_7$
- CONVERT VOLUME TO VALUE IN $CM^3$ USING CALIBRATED VALUE — $A_8$
- CORRECT OVERALL VOLUME — $A_9$
- CONVERT TO WEIGHT — $A_{10}$
- OUTPUT RESULT — $A_{11}$
- NEXT ARTICLE? — $A_{12}$

## Fig. 10

Bus Line N

CPU M

Main Memory I

Floppy Disk H

Printer J

CRT K

Key Board L

Image Memory G

A/D Converter F

Monitor TV E

TV Camera D

Slit Projector For Upper Surface $C_1$

Slit Projector For Lower Surface $C_2$

Reflecting Mirror For Upper Surface $O_1$

Reflecting Mirror For Lower Surface $O_2$

$\alpha_1$

$\alpha_2$

Q

T

Z

HZ

# Fig. 11 (a)    Fig. 11 (b)

Slit
Pattern

# Fig. 12 (a)

# Fig. 12 (b)

Flaw br1

Slit
Pattern

$a_1$

Flaw   Flaw
br1    br2

$a_n$

Slit
Pattern

# Fig. 13

# Fig. 14

```
          ┌──────────────┐
          │    START     │
          └──────────────┘
                 │
    ┌────────────────────────┐
    │       CALIBRATE        │ ─── A₁
    └────────────────────────┘
                 │
    ┌────────────────────────┐
    │   STORE SLIT POSITION  │ ─── A₂
    └────────────────────────┘
                 │
    ┌────────────────────────┐
    │ COMPUTE EACH SLIT HEIGHT│ ─── A₃
    └────────────────────────┘
                 │
    ┌────────────────────────┐
    │     COMPUTE VOLUME     │ ─── A₄
    └────────────────────────┘
                 │
    ┌────────────────────────┐
    │ CONVERT VOLUME TO VALUE IN │ ─── A₅
    │ CM³ USING CALIBRATED VALUE │
    └────────────────────────┘
                 │
    ┌────────────────────────┐
    │  ADD UPPER AND LOWER   │ ─── A₆
    │       IMAGES           │
    └────────────────────────┘
                 │
    ┌────────────────────────┐
    │    CONVERT TO WEIGHT   │ ─── A₇
    └────────────────────────┘
                 │
    ╱────────────────────────╲
    │     OUTPUT RESULT       │ ─── A₈
    ╲────────────────────────╱
                 │
    YES  ◇──────────────────◇
    ◄────│   NEXT ARTCLE?   │ ─── A₉
         ◇──────────────────◇
                 │ NO
          ┌──────────────┐
          │     END      │
          └──────────────┘
```

# Fig. 15

```
              ┌──────────────┐
              │    START     │
              └──────┬───────┘
                     │
         ┌───────────▼────────────┐
         │       CALIBRATE        │──── A₁
         └───────────┬────────────┘
                     │
    ┌────────────────▼─────────────┐
NO  ◄         ARTICLE MOVED?        ──── A₂
    │         └─────────┬────────────┘
    │                   │ YES
    │         ┌─────────▼────────────┐
    │         │      STORE DATA      │──── A₃
    │         └─────────┬────────────┘
    │         ┌─────────▼────────────┐
    │         │ COMPUTE EACH SLIT HEIGHT │──── A₄
    │         └─────────┬────────────┘
    │              ┌────▼────┐
    │         NO   │ ARTICLE │
    └──────────────│NOT PRESENT?│──── A₅
                   └────┬────┘
                        │ YES
              ┌─────────▼────────────┐
              │    COMPUTE VOLUME    │──── A₆
              └─────────┬────────────┘
              ┌─────────▼────────────┐
              │ CONVERT VOLUME TO VALUE IN │──── A₇
              │ CM³ USING CALIBRATED VALUE │
              └─────────┬────────────┘
              ┌─────────▼────────────┐
              │   ADD UPPER AND LOWER │──── A₈
              │        IMAGES         │
              └─────────┬────────────┘
              ┌─────────▼────────────┐
              │   CONVERT TO WEIGHT  │──── A₉
              └─────────┬────────────┘
              ┌─────────▼────────────┐
              │    OUTPUT RESULT     │──── A₁₀
              └─────────┬────────────┘
          YES   ┌───────▼───────┐
          ◄─────│ NEXT ARTICLE? │──── A₁₁
                └───────┬───────┘
                        │ NO
              ┌─────────▼────────────┐
              │         END          │
              └──────────────────────┘
```

A₁ — CALIBRATE

A₂ — ARTICLE MOVED?  NO / YES

A₃ — STORE DATA

A₄ — COMPUTE EACH SLIT HEIGHT

A₅ — ARTICLE NOT PRESENT?  NO / YES

A₆ — COMPUTE VOLUME

A₇ — CONVERT VOLUME TO VALUE IN $CM^3$ USING CALIBRATED VALUE

A₈ — ADD UPPER AND LOWER IMAGES

A₉ — CONVERT TO WEIGHT

A₁₀ — OUTPUT RESULT

A₁₁ — NEXT ARTICLE?  YES / NO

# Fig. 16

```
              ┌─────────────┐
              │    START    │
              └──────┬──────┘
                     │
        ┌────────────────────────────┐
        │         CALIBRATE          │──── A₁
        └────────────┬───────────────┘
                     │
        ┌────────────────────────────┐
        │     STORE SLIT POSITION    │──── A₂
        └────────────┬───────────────┘
                     │
        ┌────────────────────────────┐
        │   COMPUTE EACH SLIT HEIGHT │──── A₃
        └────────────┬───────────────┘
                     │
        ┌────────────────────────────┐
        │   DIFFERENTIATE DEFORMED   │──── A₄
        │        SLIT PATTERN        │
        └────────────┬───────────────┘
                     │
        ┌────────────────────────────┐
        │       COMPUTE VOLUME       │──── A₅
        └────────────┬───────────────┘
                     │
        ┌────────────────────────────┐
        │  CONVERT VOLUME TO VALUE IN│──── A₆
        │  CM³ USING CALIBRATED VALUE│
        └────────────┬───────────────┘
                     │
        ┌────────────────────────────┐
        │    ADD UPPER AND LOWER     │──── A₇
        │          IMAGES            │
        └────────────┬───────────────┘
                     │
        ┌────────────────────────────┐
        │      CONVERT TO WEIGHT     │──── A₈
        └────────────┬───────────────┘
                     │
        ┌────────────────────────────┐
        │       OUTPUT RESULT        │──── A₉
        └────────────┬───────────────┘
                     │
              ◇──────────────◇
              │ NEXT ARTICLE?│──── A₁₀
              ◇──────┬───────◇
                     │
              ┌──────────────┐
              │     END      │
              └──────────────┘
```

# Fig. 17

```
                    ┌──────────┐
                    │  START   │
                    └──────────┘
                         │
              ┌──────────────────────┐
              │      CALIBRATE       │ ──── A₁
              └──────────────────────┘
                         │
                    ╱─────────╲
                   ╱  ARTICLE  ╲ ──── A₂
                   ╲  MOVED?    ╱
                    ╲─────────╱
                      YES│
              ┌──────────────────────┐
              │     STORE DATA       │ ──── A₃
              └──────────────────────┘
                         │
              ┌──────────────────────┐
              │ COMPUTE EACH SLIT    │ ──── A₄
              │       HEIGHT         │
              └──────────────────────┘
                         │
                    ╱─────────╲
              NO   ╱  ARTICLE   ╲ ──── A₅
                  ╲ NOT PRESENT? ╱
                    ╲─────────╱
                      YES│
              ┌──────────────────────┐
              │ DIFFERENTIATE        │ ──── A₆
              │ DEFORMED SLIT PATTERN│
              └──────────────────────┘
                         │
              ┌──────────────────────┐
              │   COMPUTE VOLUME     │ ──── A₇
              └──────────────────────┘
                         │
              ┌──────────────────────┐
              │ CONVERT VOLUME TO    │ ──── A₈
              │ VALUE IN CM³ USING   │
              │ CALIBRATED VALUE     │
              └──────────────────────┘
                         │
              ┌──────────────────────┐
              │ ADD UPPER AND LOWER  │ ──── A₉
              │       IMAGES         │
              └──────────────────────┘
                         │
              ┌──────────────────────┐
              │  CONVERT TO WEIGHT   │ ──── A₁₀
              └──────────────────────┘
                         │
              ┌──────────────────────┐
              │   OUTPUT RESULT      │ ──── A₁₁
              └──────────────────────┘
                         │
                    ╱─────────╲
                   ╱   NEXT     ╲ ──── A₁₂
                   ╲  ARTICLE?  ╱
                    ╲─────────╱
                         │
                    ┌──────────┐
                    │   END    │
                    └──────────┘
```